# EUROPEAN PATENT SPECIFICATION

(11) **EP 2 940 812 B1**
(45) Date of publication and mention of the grant of the patent: **28.03.2018**
(21) Application number: 13867583.0
(22) Date of filing: 19.12.2013
(51) Int. Cl.: H02B 13/035, H02B 1/30

(54) **SWITCHGEAR**
SCHALTANLAGE
APPAREILLAGE DE COMMUTATION

(30) Priority: 26.12.2012 JP 2012283183
(43) Date of publication of application: 04.11.2015
(73) Proprietor: Mitsubishi Electric Corporation, Tokyo 100-8310 (JP)
(72) Inventor: YOSHIDA, Tadahiro, Tokyo 100-8310 (JP); ARIOKA, Masahiro, Tokyo 100-8310 (JP)
(74) Representative: Sajda, Wolf E.
(86) International application number: PCT/JP2013/084083
(87) International publication number: WO 2014/103873

(56) References cited:
- WO-A1-2008/136113
- JP-A- H08 340 610
- JP-A- 2001 352 623
- JP-A- 2003 324 809
- JP-A- 2007 202 232
- JP-A- 2007 202 232
- JP-A- 2012 115 025
- JP-A- 2012 115 025
- MITTELSPANNUNGSANLAGEN . KATALOG: "Leistungsschalter-Festeinbauanlagen Typ NXPLUS C bis 24 kV, gasisoliert", SIEMENS, 2 April 2012 (2012-04-02), XP055209781,

## Description

### TECHNICAL FIELD

The present invention relates to a switchgear used in a power receiving/transforming/delivering facility which supplies power.

### BACKGROUND ART

In conventional switchgears, in the case where a cable used for taking in power from outside of the switchgear and taking out power to outside of the switchgear is led into the switchgear from above, a cable connection portion is placed at the rear of the switchgear. Therefore, cable connection work needs to be performed from the rear of the switchgear.

### LIST OF CITATIONS

### PATENT DOCUMENT

Patent Document 1: Japanese Laid-Open Patent Publication
   JP 2000-308 221 A
Patent Document 2: Japanese Laid-Open Patent Publication
   JP 2012 115025 A
Patent Document 3: Japanese Laid-Open Patent Publication
   JP 2007 202232 A
Non-Patent Document Mittelspannungsanlagen Katalog "Leistungschalter-Festeinbaunanlagen Typ NXPLUS C bis 24 kV, gasisoliert",2 April 2012 (2012-04-02)
Patent Document 2 discloses in its FIG.1 a switchgear having a circuit breaker arranged in a circuit breaker storage space and movable between a disconnecting position and a connecting position, external cables arranged in an external cable storage space and connected to the circuit breaker, and a front cover removably arranged to cover the external cables in front includes an interlock mechanism comprising a mounting frame disposed between the circuit breaker storage space and the external cable storage space in a casing and mounted with the front cover. A blocking member is disposed on the mounting frame between the circuit breaker and the front cover and constructed to project toward the circuit breaker to block the movement of the circuit breaker from the disconnecting position to the connecting position when the front cover is removed.
Patent Document 3 discusses providing a switchgear, a controller accommodating space is formed on the front side within a housing, a circuit breaker accommodating space for accommodating a plurality of circuit breakers and a cable accommodating space for accommodating the cable are formed on the back side of the controller accommodating space. A bus is disposed on the upper side within the housing and connected to the other devices arrayed on a panel, one terminal in the circuit breakers is connected to the bus, and the other terminal is connected to the cable. The circuit breaker accommodating space and the cable accommodating space are laterally disposed, an opening for enabling the connection work and the maintenance/inspection work of the cable on the front side of the housing is provided on a front face of the cable accommodating space, and an openable and closable cover is provided at the opening.
The non patent document discloses a switchgear vessel hermetically sealed with SF6 gas. The switchgear of the non patent document further discloses vacuum circuit breakers and bus bars as well as cables which may be connected from the top of the switchgear. A low-voltage compartment is also removable from the switchgear.

### SUMMARY OF THE INVENTION

### PROBLEMS TO BE SOLVED BY THE INVENTION

In conventional switchgears, since the cable connection portion is placed at the rear of the switchgear so as to adapt to the power cable leading from above the switchgear, the depth dimension of the entire switchgear is enlarged, resulting in a problem that reduction in the installation area cannot be achieved.

In addition, since the cable connection work needs to be performed from the rear of the switchgear for the above reason, it is necessary to secure a workspace for cable working at the rear of the switchgear, and thus, also in this point, reduction in the installation area is difficult.

The present invention has been made to solve the above problem, and an object of the present invention is to provide a switchgear that allows a cable to be led in from above the switchgear without enlargement in the depth dimension of the switchgear, and allows cable working to be performed from the front side of the switchgear, thereby reducing the installation area.

### SOLUTION TO THE PROBLEMS

According to the invention, the problem is solved by means of a switchgear as defined in independent claim 1. Advantageous further developments of the switchgear according to the invention are set forth in the sub claims.

### EFFECTS OF THE INVENTION

According to the present invention, it becomes possible to adapt to cable leading from above a switchgear, that is, it becomes possible to adapt to not only conventional cable leading from under a switchgear but also cable leading from above a switchgear, thus broadening an application range of a switchgear relevant to the cable leading direction.

In addition, when the control portion, which is detachably configured, is detached from the switchgear, cable connection work can be performed from the front side of the switchgear. Therefore, it becomes possible to install the switchgear with its rear surface in close contact with a wall surface of an electric room or an adjacent apparatus, thereby reducing the installation area.

### BRIEF DESCRIPTION OF THE DRAWINGS

- FIG. 1: is a side view showing a switchgear and a single-line diagram showing connection of main-circuit components inside the switchgear, according to Embodiment 1 of the present
- FIG. 2: is a side view showing a state in which a control portion is separated from the switchgear in FIG. 1.
- FIG. 3: is a side view showing a switchgear according to Embodiment 2 of the present invention.
- FIG. 4: is a six-side view showing switchgears according to Embodiment 2 of the present invention.
- FIG. 5: is a side view showing a switchgear and a single-line diagram showing connection of main-circuit components inside the switchgear, according to Embodiment 3 of the present invention.
- FIG. 6: is a front view of switchgears according to Embodiment 4 of the present invention.
- FIG. 7: is a front view of switchgears according to Embodiment 5 of the present invention.
- FIG. 8: is a side view and a plan view of a switchgear according to Embodiment 6 of the present invention.
- FIG. 9: is a view showing a cable terminal connection portion according to Embodiment 6 of the present invention.
- FIG. 10: is a side view showing an exemplary switchgear.

### DESCRIPTION OF EMBODIMENTS

### Embodiment 1

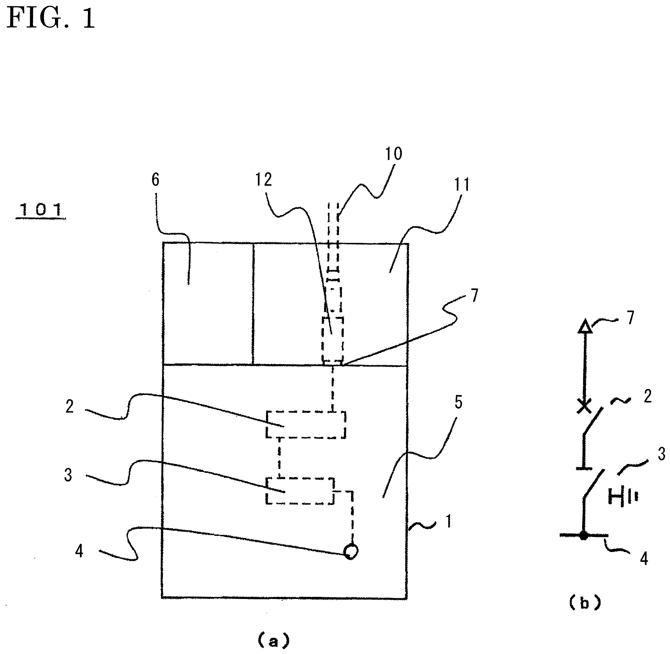

Hereinafter, an Embodiment for carrying out the present invention will be described based on the drawings. FIG. 1(a) is a side view showing a switchgear 101 according to Embodiment 1 of the present invention, and FIG. 1(b) is a single-line diagram showing connection of main-circuit components in the switchgear 101. It is noted that the left side in FIG. 1 is a front side of the switchgear 101.

In FIG. 1, the switchgear 101 includes:
a main function portion 5 accommodating a breaker 2 for breaking large current which may be caused by electrical accident or the like on a power supply circuit (main circuit) placed in an airtight main tank 1, a three-position switch 3 for reliably disconnecting or grounding an electric path, a bus bar 4 for electrically connecting switchgears 101 that are laterally adjacent, and the like; a control portion 6 for controlling operations of the breaker 2, the three-position switch 3, and the like, and for performing transmission and reception of a signal, control power supply, and the like with the outside; and
a cable compartment 11 having a housing-shape enclosure surrounding the outer periphery of a cable connection portion 7, provided above the main function portion 5, to which a power cable 10 is connected for establishing electrical connection to an electric device (not shown) provided outside the switchgear 101.

The three-position switch 3 is a combined switch having both functions of a disconnector for disconnecting the main circuit and a grounding switch for grounding the main circuit. The bus bar 4 extends in a direction perpendicular to the drawing plane in FIG. 1, and electrically connects a plurality of adjacent switchgears 101, to supply power thereto.

The control portion 6 has a housing-like outer shape and includes control devices (not shown) needed for controlling the switchgear 101, together with connection wires, on an attachment board (not shown) provided inside the control portion 6, and its connection with the main function portion 5, such as connection with an operation mechanism (not shown) for performing open/close operation for the breaker 2 or the three-position switch 3, is established via one or a plurality of control circuit connectors 8.

Therefore, the control portion 6 can be detached from the main function portion 5 by disconnecting the control circuit connectors 8 to detach a control circuit power supply (not shown) and a signal line (not shown) extending from outside of the switchgear 101 and then disengaging fastening between the main function portion 5 and the control portion 6 (which are fastened by a bolt, a hook, or the like at a predetermined position).

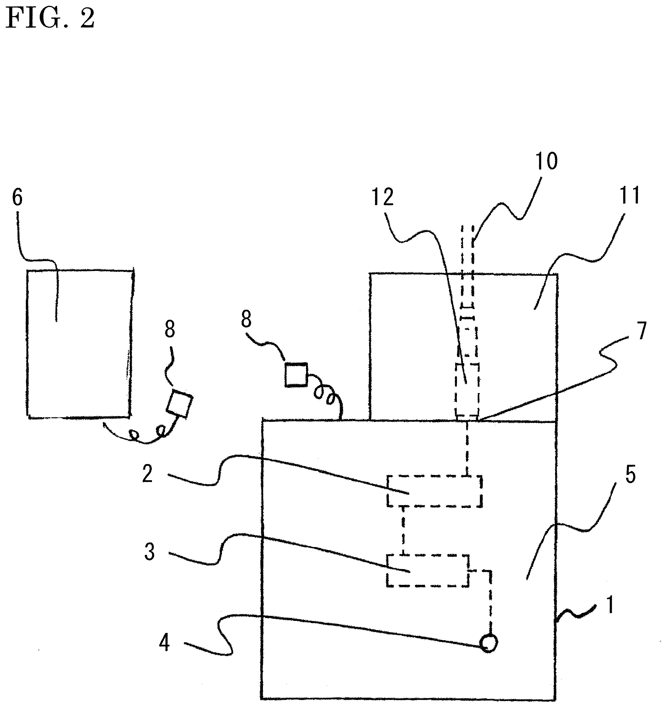

This state is shown in FIG. 2. In the state in FIG. 2, although not shown, the cable compartment 11 has an opened window on its left side (the front side of the switchgear 101), thereby allowing a working person to insert a hand or a tool into the cable compartment 11 to perform connection work for connecting the cable 10 to the cable connection portion 7.

The cable 10 is led into the cable compartment 11 from above the switchgear 101 and is connected to the cable connection portion 7. The cable connection portion 7 is provided so as to protrude upward of the main function portion 1, and is connected with the cable 10 via a cable terminal 12 having an L shape or a linear shape.

Here, before work of connecting the cable 10 to the cable connection portion 7 is performed, the control portion 6 is detached, whereby the cable work can be performed from the front side of the switchgear 101.

Thus, since the control portion 6 is configured to be easily detachable from the switchgear 101 and is detached before the connection work for the cable 10, the connection work for the cable 10 from the front side of the switchgear 101 can be easily performed.

Therefore, work of connecting the cable 10 from the rear side of the switchgear 101 is unnecessary, and it becomes possible to install the switchgear 101 with its rear surface in close contact with a wall of an electric room (not shown) or a device (not shown) such as a switchgear placed adjacent to the switchgear 101.

In addition, since the cable connection portion 7 is placed at an upper portion of the switchgear 101, the depth dimension of the switchgear can be made equal to the depth dimension of the main function portion 1, and the depth dimension of the entire switchgear can be reduced.

### Embodiment 2

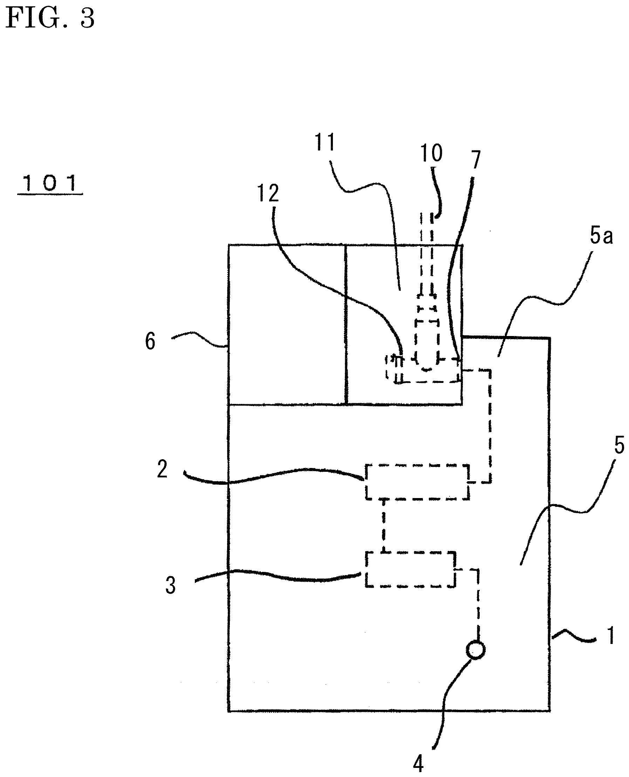

Embodiment 2 of the present invention will be described with reference to FIG. 3. FIG. 3 is a side view showing a switchgear 101. As in FIG. 1, the left side in FIG. 3 is a front side of the switchgear 101. Hereinafter, the embodiment for carrying out the present invention will be described based on the drawings.

In FIG. 3, parts that will not be particularly described are the same as in FIG. 1. In FIG. 3, the upper portion of the main function portion 5 partially extends upward at the rear side of the cable compartment 11. An upward extended portion 5a of the main function portion 5 that extends is arranged together with the control portion 6 and the cable compartment 11 along the depth direction.

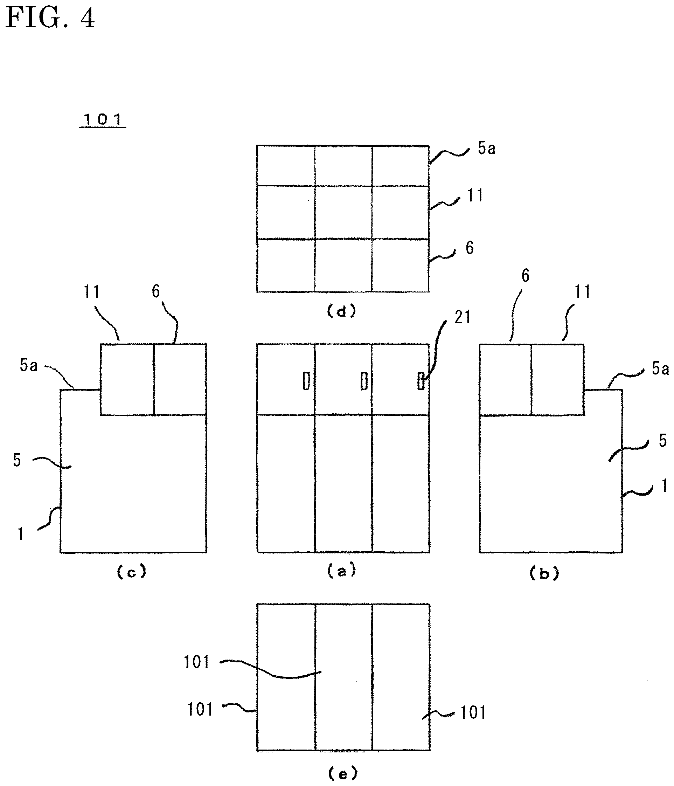

FIG. 4 is a six-side view showing three switchgears 101 of Embodiment 2 of the present invention arranged laterally (three faces of switchgears in a row). In FIG. 4, FIG. 4(a) is a front view of the switchgears 101, FIG. 4(b) is a right side view, FIG. 4(c) is a left side view, FIG. 4(d) is a plan view, and FIG. 4(e) is a bottom view.

As shown in this Embodiment 2, since a part of the main function portion 5 extends upward as shown in FIG. 3, even if the cable connection portion 7 is formed so as to face horizontally and in the front-rear direction of the switchgear 101, cable connection can be made with the cable terminal 12 having an L-shaped end portion.

Further, since the cable terminal 12 is formed in an L shape, when work is performed rearward from the front side of the switchgear 101, a connection operation portion of the L-shaped cable terminal 12 faces the front side of the switchgear 101, and therefore connection work can be easily performed.

In addition, since the cable connection portion 7 faces in the horizontal direction, a rising part in the height direction is lower than in Embodiment 1, and as a result, the height of the switchgear 101 can be reduced.

### Embodiment 3

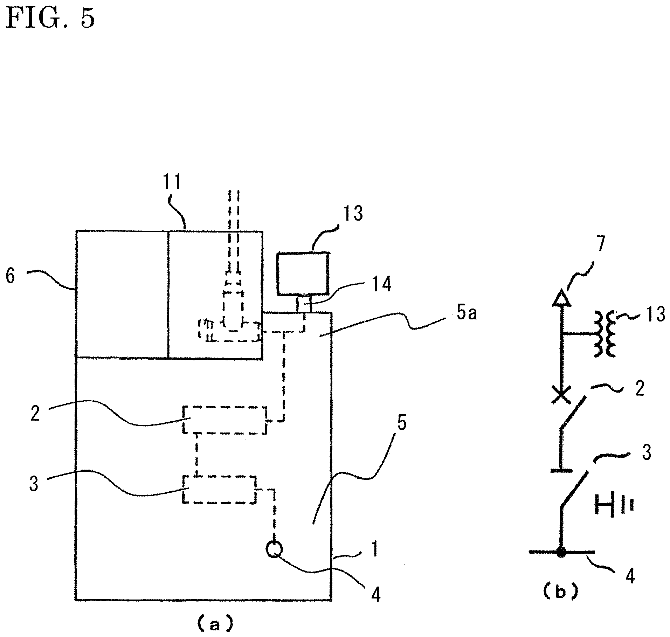

Embodiment 3 of the present invention will be described with reference to FIG. 5. FIG. 5(a) is a side view showing a switchgear 101 of Embodiment 3 of the present invention, and FIG. 5(b) is a single-line diagram showing connection of main-circuit components inside the switchgear 101.

In FIG. 5, parts that will not be particularly described are the same as in FIG. 1. In the main function portion 5 in FIG. 5, the height of a top surface of an upward extended portion 5a partially extending upward is lower than the height of the cable compartment 11.

In a space above the upward extended portion 5a of the main function portion 5 that extends upward, a lightning arrester (not shown) for protecting an electric path of the main circuit from overvoltage or a transformer 13 for instrument for measuring voltage on the electric path is accommodated.

Here, in the case where the main function portion 5 is formed by the main tank 1 having airtightness, in the configuration shown in FIG. 5, a device connection portion 14 for connecting the lightning arrester (not shown) or the transformer 13 for instrument is provided on a top surface of the main function portion 5.

Such a configuration makes it possible to easily attach or detach the lightning arrester (not shown) or the transformer 13 for instrument from outside of the switchgear 101 without discharging an insulation gas filling the main tank 1.

In addition, since the lightning arrester (not shown) or the transformer 13 for instrument can be placed on a top surface of the cable compartment 11 and to the front side of the switchgear 101 with respect to the rear end of the main function portion 5, the external dimension of the switchgear 101 does not increase, and thus the switchgear can be downsized.

### Embodiment 4

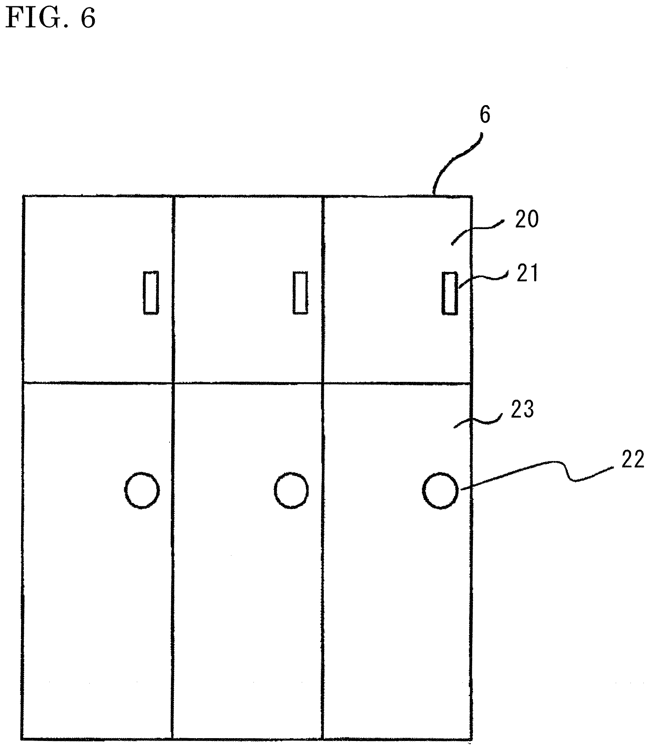

Embodiment 4 of the present invention will be described with reference to FIG. 6. FIG. 6 shows a front view of a switchgear of Embodiment 4 of the present invention, and shows a front view of three switchgears 101 arranged laterally (three faces of switchgears in a row).

21 denotes a handle used for open/close operation for a front door 20 of the control portion 6, and 22 denotes a pressure instrument indication window for indicating a pressure of an insulation gas sealed in the main tank 1.

### Embodiment 5

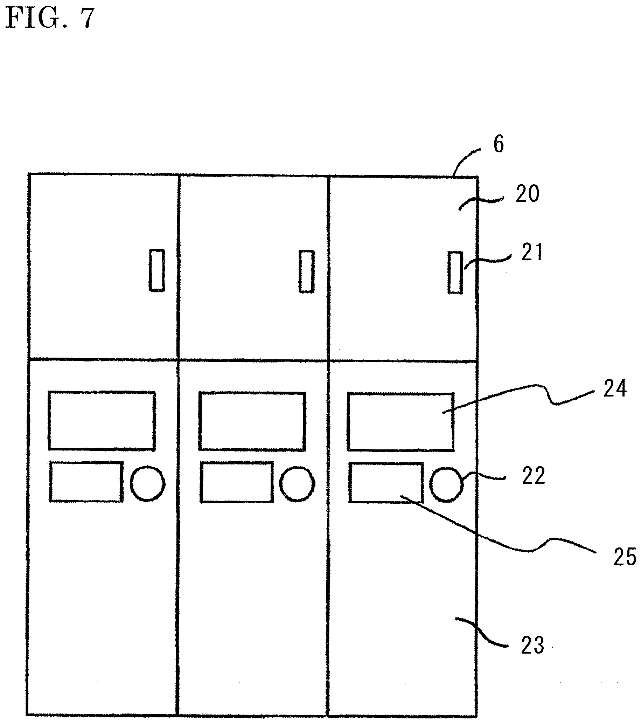

Embodiment 5 of the present invention will be described with reference to FIG. 7. FIG. 7 shows a front view of a switchgear of Embodiment 5 of the present invention, and, shows a front view of three switchgears 101 arranged laterally (three faces of switchgears in a row).

24 denotes a breaker front side operation panel attached on a main function portion front side cover 23 and equipped with an instrument (not shown) for operating the breaker 2, and 25 is a three-position switch front side operation panel equipped with an instrument (not shown) for operating the three-position switch.

### Embodiment 6

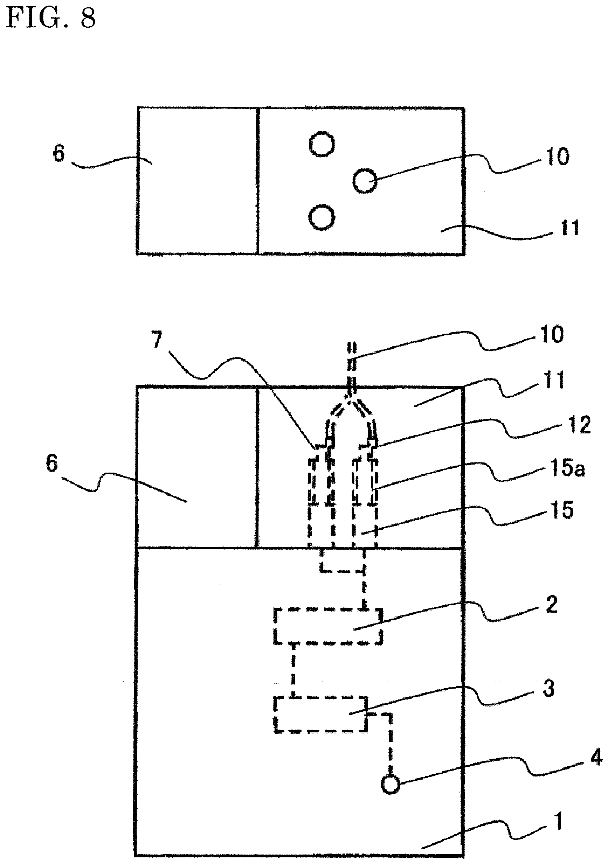

Embodiment 6 of the present invention will be described with reference to FIG. 8.

FIG. 8 is a side view and a plan view of a switchgear of Embodiment 6 of the present invention, showing a structure in which the cable compartment 11 is placed above the main tank 1 accommodating the breaker 2 and the three-position switch 3, and the cable 10 is led in from above.

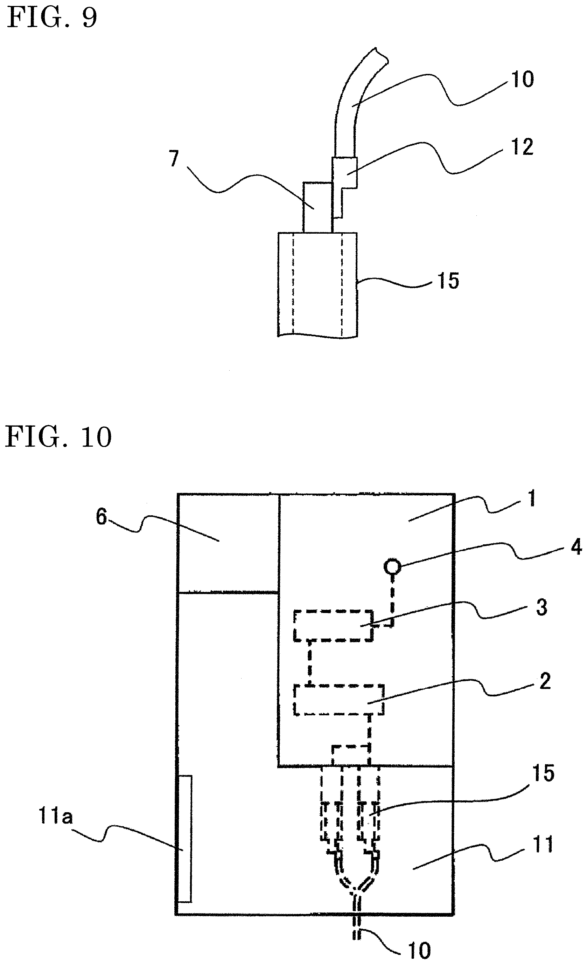

Here, the cable connection portion 7 and the cable terminal 12 are exposed to atmospheric space, and are fastened by a screw, a nut, or the like (not shown) as shown in FIG. 9.

In addition, a cable bushing 15 having the cable connection portion 7 at an upper portion thereof is attached to the main tank 1, and has an appropriate crimp portion 15a for ensuring insulation between the cable connection portion 7 and the main tank 1 in the atmosphere even in a polluted state.

Further, in order to maintain insulation among the cable connection portions 7 and among the cable terminals 12, which are exposed to the atmosphere, it is necessary to provide an appropriate spatial separation distance between the cable bushings 15.

In order to secure the spatial separation distance within a limited range of the top surface of the main tank 1, three cable bushings 15 are placed substantially in a triangle formation.

Such a structure that allows cable connection in the atmosphere can simplify work for attaching the cable terminal 12 at an end portion of the cable 10 and work for connecting the cable connection portion 7 and the cable terminal 12.

### Other example of switchgear

Another exemplary switchgear will be described with reference to FIG. 10.

FIG. 10 is a side view of a switchgear showing a structure in which the cable compartment 11 is placed below the main tank 1 accommodating the breaker 2 and the three-position switch 3, and the cable 10 is led in from below. The configuration of a cable connection part including the cable bushing 15 is the same as in Embodiment 6.

In addition, the bus bar 4 is placed at an upper portion of the main tank 1. Further, the control portion 6 is placed in front of a bus chamber accommodating the bus bar 4. For the cable compartment 11, a door 11a that is openable and closable is provided at the front side, and the cable compartment 11 can be accessed by the door 11a being opened.

It is noted that, within the scope of the present invention, the above embodiments may be freely combined with each other, or each of the above embodiments may be modified or abbreviated as appropriate.

### DESCRIPTION OF THE REFERENCE CHARACTERS

- 1: main tank
- 2: breaker
- 3: three-position switch
- 4: bus bar
- 5: main function portion
- 5a: upward extended portion of main function portion
- 6: control portion
- 7: cable connection portion
- 8: control circuit connector
- 10: cable
- 11: cable compartment
- 11a: door
- 12: cable terminal
- 13: transformer for instrument
- 14: device connection portion
- 15: cable bushing
- 15a: crimp portion
- 20: front door
- 21: handle
- 22: pressure instrument indication window
- 23: main function portion front side cover
- 24: breaker front side operation panel
- 25: three-position switch front side operation panel
- 101: switchgear

## Claims

1. A switchgear (101) comprising:
- a main function portion (5) formed by an airtight main tank accommodating a breaker (2);
and **characterized by**;
- a cable compartment (11) placed above the main function portion (5), the cable compartment (11) being provided with an opening portion facing a front side from which the switchgear (101) is operated, said cable compartment (11) surrounding a cable connection portion (7); and
- a control portion (6) detachably placed, above the main function portion (5), at a front side of the cable compartment (11),
wherein a cable (10) is allowed to undergo attachment/detachment work through the opening portion from the front side of the switchgear (101) by detaching the control portion (6) from the main function portion (5).

2. The switchgear according to claim 1,
wherein the main function portion (5) has an upward extended portion (5a) extending upward from an upper rear portion of the main function portion (5), and
wherein the control portion (6), the cable compartment (11), and the upward extended portion (5a) are arranged in this order from a front side of the switchgear (101).

3. The switchgear according to claim 2,
wherein a lightning arrester or a transformer (13) for instrument is provided, above the upward extended portion (5a) of the main function portion (5), at a rear of the cable compartment (11).

4. The switchgear according to claim 2,
wherein the cable connection portion (7) is formed on a side surface of the upward extended portion (5a) of the main function portion (5), the side surface corresponding to a front side of the switchgear, the cable connection portion (7) protruding toward the control portion (6) side.

## Patentansprüche

1. Schaltvorrichtung (101), die Folgendes aufweist:
- einen Hauptfunktionsbereich (5), der mittels eines luftdichten Hauptbehälters ausgebildet ist, in dem ein Leistungsschalter (2) aufgenommen ist; und
**gekennzeichnet durch**:
- einen Kabelraum (11), der über dem Hauptfunktionsbereich (5) angeordnet ist, wobei der Kabelraum (11) mit einem Öffnungsbereich vorgesehen ist, der der Vorderseite, von der aus die Schaltvorrichtung (101) betrieben wird, zugewandt ist, wobei der Kabelraum (11) einen Kabelverbindungsbereich (7) umgibt; und
- einen Steuerungsbereich (6), der abnehmbar angebracht ist, und zwar über dem Hauptfunktionsbereich (5) an der Vorderseite des Kabelraums (11),
wobei ein Kabel (10) Verbindungs/Abnahme-Arbeiten unterworfen werden kann, und zwar durch den Öffnungsbereich von der Vorderseite der Schaltvorrichtung (101) aus durch Abnehmen des Steuerungsbereichs (6) von dem Hauptfunktionsbereich (5).

2. Schaltvorrichtung nach Anspruch 1,
wobei der Hauptfunktionsbereich (5) einen nach oben erweiterten Bereich (5a) aufweist, der sich von einem oberen, hinteren Bereich des Hauptfunktionsbereichs (5) aus nach oben erstreckt, und
wobei der Steuerungsbereich (6), der Kabelraum (11) und der nach oben erweiterte Bereich (5a) in dieser Reihenfolge von der Vorderseite der Schaltvorrichtung (101) aus angeordnet sind.

3. Schaltvorrichtung nach Anspruch 2,
wobei ein Überspannungsableiter oder ein Transformator (13) für ein Gerät vorgesehen ist, und zwar über dem nach oben erweiterten Bereich (5a) des Hauptfunktionsbereichs (5) an einem hinteren Bereich des Kabelraums (11).

4. Schaltvorrichtung nach Anspruch 2,
wobei der Kabelverbindungsbereich (7) an einer Seitenfläche des nach oben erweiterten Bereichs (5a) des Hauptfunktionsbereichs (5) ausgebildet ist, wobei die Seitenfläche der Vorderseite der Schaltvorrichtung entspricht, und wobei der Kabelverbindungsbereich (7) in Richtung der Seite des Steuerungsbereichs (6) vorsteht.

## Revendications

1. Appareillage de commutation (101) comprenant :
- une portion fonctionnelle principale (5) formée par un réservoir principal étanche à l'air qui abrite un coupe-circuit (2) ;
et **caractérisé par** :
- un compartiment à câble (11) placé au-dessus de la portion fonctionnelle principale (5), le compartiment à câble (11) étant doté d'une portion d'ouverture en face d'un côté avant depuis lequel l'appareillage de commutation (101) est actionné, ledit compartiment à câble (11) entourant une portion de connexion de câble (7) ; et
- une portion de commande (6) placée de façon détachable, au-dessus de la portion fonctionnelle principale (5), à un côté avant du compartiment à câble (11),
dans lequel un câble (10) est amené à subir un travail d'attachement/détachement à travers la portion d'ouverture depuis le côté avant de l'appareillage de commutation (101) en détachant la portion de commande (6) depuis la portion fonctionnelle principale (5).

2. Appareillage de commutation selon la revendication 1,
dans lequel la portion fonctionnelle principale (5) comprend une portion s'étendant vers le haut (5a) qui s'étend vers le haut depuis une portion arrière supérieure de la portion fonctionnelle principale (5), et
dans lequel la portion de commande (6), le compartiment à câble (11), et la portion s'étendant vers le haut (5a) sont agencés dans cet ordre depuis un côté avant de l'appareillage de commutation (101).

3. Appareillage de commutation selon la revendication 2,
dans lequel un dispositif d'arrêt anti foudre ou un transformateur (13) pour instruments est prévu, au-dessus de la portion s'étendant vers le haut (5a) de la portion fonctionnelle principale (5), à l'arrière du compartiment à câble (11).

4. Appareillage de commutation selon la revendication 2,
dans lequel la portion de connexion de câble (7) est formée sur une surface latérale de la portion s'étendant vers le haut (5a) de la portion fonctionnelle principale (5), la surface latérale correspondant à un côté avant de l'appareillage de commutation, la portion de connexion de câble (7) se projetant vers le côté de la portion de commande (6).
